# EUROPEAN PATENT SPECIFICATION

(11) **EP 0 999 719 B1**
(45) Date of publication and mention of the grant of the patent: **19.04.2006**
(21) Application number: 99308694.1
(22) Date of filing: 02.11.1999
(51) Int. Cl.: H04Q 11/04, H04L 12/56

(54) **Method and apparatus for completing telephone calls between subnetworks**
Verfahren und Vorrichtung zur Vervollständigung von Fernsprechanrufen zwischen Teilnetzen
Procédé et appareil pour compléter des appels téléphoniques entre des sous-réseaux

(30) Priority: 02.11.1998 US 106741 P; 17.12.1998 US 213769
(43) Date of publication of application: 10.05.2000
(73) Proprietor: Nortel Networks Limited, St.Laurent, Quebec H4S 2A9 (CA)
(72) Inventor: Sylvain, Dany, Gatineau, Québec J8T 7R8 (CA); Lakhani, Faizel, Kanata, Ontario K2K 2B6 (CA)
(74) Representative: Mackenzie, Andrew Bryan

(56) References cited:
- EP-A- 0 793 393
- WO-A-98/23056
- WO-A-98/35527
- MODARRESSI A R ET AL: "SIGNALING SYSTEM NO. 7: A TUTORIAL" IEEE COMMUNICATIONS MAGAZINE, IEEE SERVICE CENTER. PISCATAWAY, N.J, US, vol. 28, no. 7, 1 July 1990 (1990-07-01), pages 19-20,22-35, XP000140255 ISSN: 0163-6804

## Description

### TECHNICAL FIELD

The present invention relates to the field of providing telephone services using asynchronous transfer mode (ATM) facilities and, in particular, to a method and apparatus for completing telephone calls between ATM subnetworks overlaid on an ATM backbone network.

### BACKGROUND OF THE INVENTION

Telecommunication service providers are considering using ATM as the technology of choice to consolidate their networking infrastructure under one "umbrella". An aim of this activity is to provide ATM switching systems in a networking backbone that can serve as the transport technology for traffic emanating from different sources. A second aim of this activity is to allow service providers to maximize their investment in ATM equipment. Service providers to date have primarily used ATM networks for data transport. By using ATM networks as a backbone for diverse traffic sources, service providers can expand the usage of their ATM facilities and maximize the return on capital investment made in this equipment.

In addition, the development of systems for supporting telephone services on an ATM backbone is being driven by increasing congestion arising in the PSTN/ISDN. The increasing demand for long distance services, resulting from price reductions and competition among carriers and the demand for access to Internet Service Providers (ISPs) is contributing to greater demand on available capacity in the PSTN/ISDN.

However, several challenges exist in deploying telephone service on an ATM network backbone. One of the challenges facing this network evolution involves the challenge of providing the multitude of services available in today's PSTN/ISDN. The services provided by ATM based telephone service must remain the same as the services provided in the PSTN/ISDN. However, today's ATM switches and networks are not enabled to support PSTN/ISDN services. ATM switches currently deployed lack both the physical infrastructure and signaling systems to support PSTN/ISDN intelligent services. Beyond simple connection control, they do not provide any of the intelligent services such as free-phone, number translation, local number portability and the myriad of supplementary services provided by a PSTN/ISDN switch. An additional consideration is the fact that regulatory requirements in some jurisdictions dictate the types of service that a service provider must offer. In addition, customers cannot be expected to accept fewer services when a service provider changes or upgrades transport facilities. A reduction in the number of services results in an immediate loss of customers, loss of revenue, and difficulties in marketing to new customers due to competition.

An ATM based system which is capable of supporting the services offered in the PSTN/ISDN is described in Applicant's co-pending patent application entitled TRANSIT TRUNK SUBNETWORK which was filed on September 23, 1998 and has been assigned United States patent no. 6,282,194, the disclosure of which is incorporated herein by reference. A transit trunk subnetwork permits an ATM subnetwork to be integrated into the PSTN using interfaces referred to as "Multi-Service Platforms" (MSPs). The MSPs provide access to the ATM subnetwork by synchronous transfer mode (STM) switches and convert pulse code modulated (PCM) data to ATM cells and vice versa. The Transit Trunk Subnetwork also includes a call manager which communicates with STM switches through a Common channel Signaling (CCS) network, such as the Signaling System 7 (SS7) network. The call manager also communicates with the ATM subnetwork through ATM links. Consequently, the call manager is enabled to support PSTN/ISDN intelligent services, while permitting the ATM subnetwork to serve as the transport medium for bearer traffic routed between STM switches in the subnetwork.

International application number WP 98/23056 describes a system for interfacing an ISDN or non-ISDN system with an ATM system. The system can process the ISDN signalling to select ATM connections and then inter-work the ISDN connections with selected ATM connections. International application number WO 98/35527 also describes a method for establishing a communication session over a path supported at least in part by a telephony network and an ATM network.

However, in order to capitalize on the benefits offered by the Transit Trunk Subnetwork, a need exists for a method of completing calls between subnetworks without diverting the calls through the PSTN.

### SUMMARY OF THE INVENTION

Accordingly, it is an object of the present invention to provide a method for completing calls between transit trunk subnetworks without diverting the calls into the PSTN.

It is a further object of the invention to provide a signaling protocol to permit call routing between transit trunk subnetworks.

It is a further object of the invention to provide a signaling protocol for completing calls between transit trunk subnetworks which uses the CCS system of the PSTN/ISDN.

It is yet a further object of the invention to provide a signaling protocol for completing calls between transit trunk subnetworks which uses backward call set up in which calls are set up by routing signaling messages from a terminating interface to an originating interface, even though CCS messages proceed in a standard forward direction.

It is another object of the invention to provide a signaling protocol for completing calls between transit trunk subnetworks in which standard Integrated Services Digital Network User Part (ISUP), SS7 signaling messages are used to complete calls so that call control signaling is effected without modifying PSTN/ISDN switches served by the subnetworks.

In accordance with the above objects, the invention provides an apparatus for transferring voice or voice grade data using asynchronous transfer mode (ATM) protocol between first and second telephone switches respectively associated with first and second subnetworks adapted to use an ATM backbone network for the transfer of inter-switch bearer traffic, said first telephone switch having a first interface with said first subnetwork and said second telephone switch having a second interface with said second subnetwork, said first and second interfaces being respectively adapted to convert pulse code modulated data to ATM cells and vice versa, **CHARACTERIZED** by:
a first call manager logically associated with the first subnetwork;
a second call manager logically associated with the second subnetwork;
said first and second call managers being enabled to exchange signaling messages, the signaling messages containing information to effect call set up between said first and second interfaces
said first call manager (44) is enabled to receive a signaling message from said first switch (27) and modify a content of said signaling message to include information related to said first interface (40) required to set up a call associated with said signaling message, wherein said information comprises an ATM address of said first interface (40) in said first subnetwork (32).

In accordance with the above objects, the invention also provides a method for routing a telephone call between a first and second telephone switch respectively associated with a first and second subnetwork which use asynchronous transfer mode (ATM) protocol to transfer bearer traffic between telephone switches in the respective subnetworks, said first telephone switch having a first interface with said first subnetwork and said second telephone switch having a second interface with said second subnetwork, first and second call managers being logically associated with said respective first and second subnetworks, **CHARACTERIZED** by:
(i) routing a call request message from said first telephone switch to said first call manager;
(ii) translating a dialed number extracted from said call request message to obtain routing information for said call;
(iii) modifying said call request message to include information pertaining to the origination of the call and forwarding said modified call request message to said second call manager using the routing information for the call request message wherein the information pertaining to the origination of the call comprises an ATM address of said first interface (40);
(iv) translating a dialed number extracted from said modified call request message at said second call manager to identify said second telephone switch;
(v) sending a signaling message from said second call manager to said second interface, the signaling message including the information pertaining to the origination of the call;
(vi) sending a signaling message from said second interface to said first interface to effect a connection to transfer bearer traffic associated with the call; and
(vii) further modifying the call request message and forwarding said further modified call request message from said second call manager to said second telephone switch to initiate seizure of a trunk at said second switch to enable call completion.

### BRIEF DESCRIPTION OF THE DRAWINGS

FIG. 1 is a schematic diagram illustrating an ATM backbone network which supports the transfer of traffic emanating from different sources;
FIG. 2 is a schematic diagram illustrating a network topology and signaling configuration for a PSTN supported by ATM subnetworks overlaid on an ATM backbone;
FIG. 3 is a schematic diagram illustrating the structure of an Application Transport Parameter (APP) which is encoded into certain ISUP signaling messages;
FIG. 4A illustrates a signaling sequence for establishing calls across subnetworks overlaid on an ATM backbone, where the bearer traffic of the calls are routed across switched virtual circuits (SVCs) set up for the call;
FIG. 4B illustrates the remaining steps in the signaling sequence of FIG. 4A;
FIG. 5 illustrates a signaling sequence for taking down calls across subnetworks overlaid on an ATM backbone, where bearer traffic of the calls is transferred using SVCs set up for the calls;
FIG. 6 illustrates a signaling sequence for establishing calls across subnetworks overlaid on an ATM backbone, where the bearer traffic of the calls is transferred using SVCs removed from an SVC cache.

### DETAILED DESCRIPTION OF THE PREFERRED EMBODIMENT

The present invention relates to an apparatus and method for supporting call transfer between transit trunk subnetworks overlaid on an ATM backbone network which provides both narrowband and broadband services.

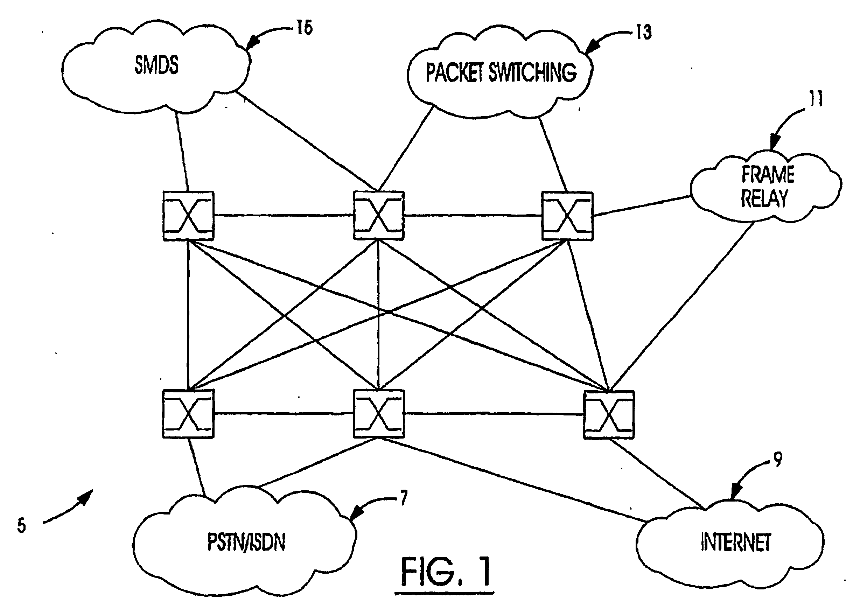

FIG. 1 is a schematic diagram illustrating an ATM backbone network 5 which supports traffic emanating from different sources. The sources of traffic are illustrated as network islands consisting of: a PSTN/ISDN 7; an Internet network 9; a frame relay network 11; a packet switching network 13; and a switched multi-mega bit data service (SMDS) 15. The ATM backbone network 5 includes a plurality of ATM switches which are interconnected by ATM links, schematically illustrated by solid lines between the switches. FIG. 1 shows six such switches, although an ATM backbone network may include any number of ATM switches, and the physical size of the network is a matter of design choice. The ATM backbone network 5 may be used to support a plurality of logical subnetworks for supporting PSTN/ISDN services. Such subnetworks may be the transit trunk subnetworks referred to above and described in Applicant's co-pending patent application.

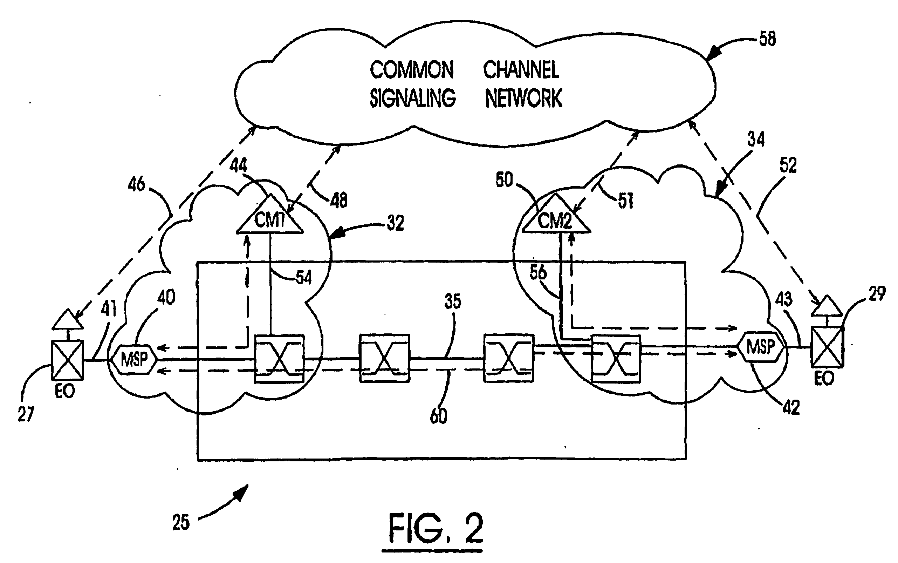

FIG. 2 schematically illustrates a network architecture which permits bearer traffic to be routed between two end offices 27 and 29 in the PSTN through an ATM backbone network 25. The end offices 27 and 29 are respectively served by different transit trunk subnetworks. The ATM backbone network is represented by block 25 and is of indeterminate size. The ATM backbone network 25 supports at least a first transit trunk subnetwork 32 and a second transit trunk subnetwork 34, hereinafter referred to as subnetworks 32, 34. Each of the subnetworks 32 and 34 are associated with ATM switches that are interconnected by ATM links. The first subnetwork 32 and second subnetwork 34 are schematically shown as being interconnected by a link 35, representative of one or more virtual circuits (VCs) that may be established to interconnect the subnetworks 32 and 34. Since the ATM backbone network 25 provides only a transport service, it can be abstracted and considered as a single hop between two interfaces which may be considered to be adjacent in the path of the call. This concept leads to the term "ATM trunking", which denotes the use of switched Virtual Channel Connections (VCCs) or switched virtual path connections (VPCs) to carry traffic from one interface at a PSTN/ISDN node to another rather than the usual trunks based on the current PSTN/ISDN hierarchy. Establishment of these ATM "trunks" is done under the control of both ISUP and ATM protocols, as will be further explained below.

The interfaces between the end offices 27, 29 and the ATM backbone 25 are hereinafter referred to as Multi-Service Platforms (MSPs) 40 and 42, which are described in further detail in applicant's co-pending application described above. The MSPs 40 and 42 convert PCM data to ATM cells and vice versa. In addition, the MSPs 40 and 42 map VCCs, in particular, SVCs set up for transferring bearer traffic between the corresponding trunks 41 and 43 seized at the respective end offices 27 and 29.

The network architecture of FIG. 2 also includes a first call manager 44 associated with the subnetwork 32 and a second call manager 50 associated with the subnetwork 34. Each of the first and second call managers 44 and 50 have a CCS network point code, and are configured to receive and route ISUP signaling messages through the CCS network, as will be further explained below. Although the MSPs 40, 42 and the call managers 44, 50 are illustrated in FIG. 2 as separate entities, it should be understood that they may be implemented on the same platform. The call managers may also be implemented within the end offices 27, 29 as explained in Applicant's co-pending United States patent application entitled HYBRID TDM AND ATM VOICE SWITCHING CENTRAL OFFICE AND METHOD OF COMPLETING INTER-OFFICE CALLS USING SAME which was filed on December 7, 1998.

The network architecture of FIG. 2 further includes CCS signaling links 46 and 52 which permit the end offices 27 and 29 to communicate with the CCS network 58, which typically uses SS7 protocol. The first call manager 44 is connected to a CCS signaling link 48, while the second call manager 50 is connected to a CCS signaling link 51. Each of the call managers are further connected to ATM links 54 and 56 to permit the first and second-call managers to send control messages to the MSPs 40 and 42. CCS messages from both the end offices and call managers are thus routed over the CCS network 58, while control messages for MSPs in the subnetworks 32, 34 are routed through the ATM backbone network 25 using ATM circuits. The ATM circuits are schematically illustrated by the dashed lines between the first MSP 40 and first call manager 44, and between second MSP 42 and second call manager 50. The ATM bearer circuit 60 that results when a call is set up is also illustrated schematically between the subnetworks 32 and 34. Thus, each call manager is configured to engage in ISUP signaling with the CCS network, and control messaging with the subnetworks, but maintains these signaling functions separate from each other. This configuration permits the network architecture to support intelligent services derived from the PSTN/ISDN, while using an ATM backbone as the underlying infrastructure for call transport. In addition, the signaling configuration imposes minimum requirements on the ATM backbone network 25, making the architecture immediately feasible for implementation in the PSTN/ISDN. Furthermore, no changes to the CCS protocol is needed, since CCS messaging and ATM control messages are managed separately by each call manager.

However, in order to implement the necessary signaling protocols required to set up calls between two or more subnetworks, some mechanism must be implemented to enable the call managers associated with each of the subnetworks to obtain information pertaining to the call. In accordance with the invention, the mechanism used is a messaging parameter used to transfer the information. This parameter is referred to as an Application Transport parameter (APP) which is inserted into ISUP signaling messages routed across the CCS network 58 (FIG. 2). The APP consists of a plurality of octets which provide various information for signal processing across ATM subnetworks. The APP is defined in further detail in Report R-77 of the Telecommunications Standardization Sector of the International Telecommunication Union, published November 1997, which is incorporated herein by reference.

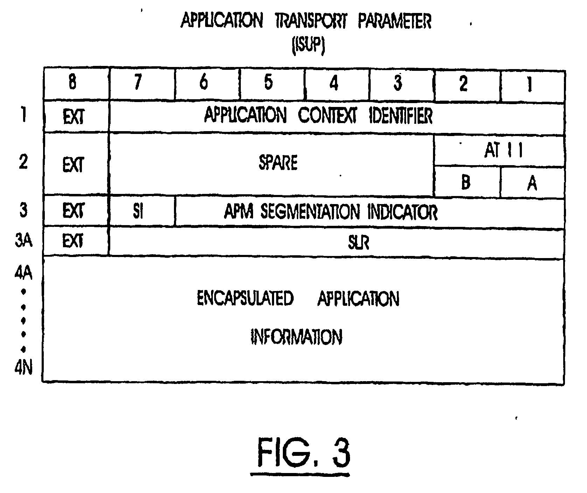

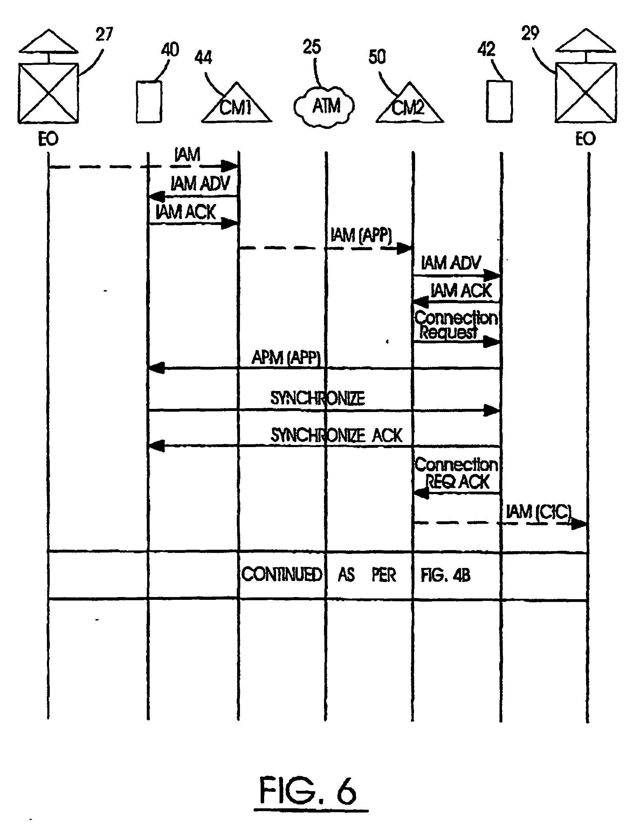

FIG. 3 provides a schematic diagram of the structure of an APP. Each of the first four octets include a one bit extension indicator, which is used to indicate whether further octets exist. This permits expansion of the value range for each field. If the extension indicator is set to "0", a further octet exists. If it is set to "1", no further octet exists. The first extension indicator is followed by a seven bit application context identifier which is a value that uniquely identifies the application using the application transport mechanism. The second octet includes the one bit extension identifier followed by five spare bits. The following two bits are Application Transport Instruction Indicators (ATII), respectively referred to as "B" and "A". Bit B is a Send Notification Indicator which either provides an instruction to send or not send a notification. Bit A is a Release Call Indicator which will either indicate an instruction to release or not to release a call. Octet 3 has the one bit extension indicator followed by a one bit Sequence Indicator (SI). The SI is used to indicate the first segment of an Application Transport Message (APM) Segmentation Indicator sequence. The APM is a message type described in Report R-77 referred to above and incorporated herein by reference. The APM is an ISUP message type which is used for call completion when a VCC is deployed from cache. The use of the APM in call set-up is described in further detail below with reference to Fig. 6. The APM Segmentation Indicator indicates the number of remaining segments carrying information used in the APM. The APM Segmentation Indicator indicates a final segment (value = "0"), or a specified number of segments are to follow (value = "1-9"). Octet 3a has the one bit extension indicator, followed by a Segmentation Local Reference (SLR) defined in seven bits. The SLR is a unique value assigned to a call and is used to associate segments in a segmented APM. The number of segments are defined by the APM Segmentation Indicator in Octet 3. Octets 4a through 4n contain Encapsulated Application Information and utilize eight bits in a variable number of octets. The Encapsulated Application Information is application information required to be transported by an ISUP Initial Address Message (IAM) or an APM. The coding for the Encapsulated Application Information may take several forms. For example, the coding may be a tag followed by a length field and a value field; a tag followed by a value field only; or a tag followed by flags.

For the purposes of call set-up between subnetworks, the Encapsulated Application Information defines three sets of data required during call set-up. These are:
(1) An ATM VCC identifier;
(2) The ATM address of the MSP associated with the originating end office; and
(3) A signalling correlation tag;

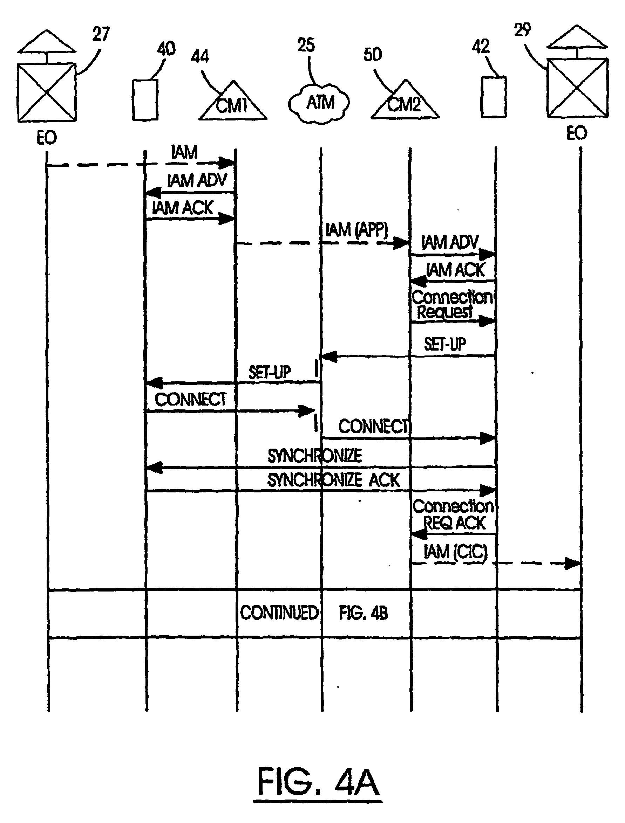

The purpose of these three sets of data carried in the Encapsulated Application Information field is explained with reference to the call set-up signaling sequence set forth in FIG. 4A.

FIG. 4A illustrates a signalling sequence for setting up calls through the ATM backbone network 25 shown in FIG. 2. FIG. 4A illustrates the signalling sequence for connection set-up using VCCs when a call originates at an end office 27 and terminates at an end office 29. It should be understood, however, that analogous principles may be applied when a call is set up across any number of intermediate subnetworks. The interface between the originating end office 27 and the first subnetwork is provided by a first MSP 40 and a first call manager 44. The interface between the terminating end office 29 and the second subnetwork is provided by a second MSP 42 and a second call manager 50. In the signaling sequences illustrated in FIGS. 4a-6, dashed lines are used to indicate ISUP signal messages while solid lines are used to indicate ATM signal messages.

As shown in FIG. 4A, a call originates at end office 27. In response to the call, the originating end office 27 formulates an SS7 IAM and forwards the IAM over the SS7 network to the first call manager 44 associated with the first subnetwork. On receipt of the IAM, the first call manager 44 extracts call information from the message and formulates an IAM Advisory message (IAM ADV) which it sends through the ATM backbone network 25 to the first MSP 40. The MSP 40 responds with an IAM Acknowledge (IAM ACK) which is returned to the first call manager 44. The first call manager 44 translates a dialed number extracted from the IAM to obtain routing information for the call. The IAM is then modified to include: an originating point code (OPC) of the call manager 44; a destination point code (DPC) of the call manager 42 in the second subnetwork 34; and information to identify features of the first subnetwork 32 related to the call. The modified IAM is subsequently sent to the second call manager 50. The IAM is modified in part by inserting the APP shown in FIG. 3, which includes the Application Context Identifier and the three pieces of data stored in the Encapsulated Application Information Fields, as described previously. These are:
(1) An ATM VCC identifier;
(2) The ATM address of the first MSP; and
(3) A signaling correlation tag.

The ATM VCC identifier is used in conjunction with the Application Context Identifier as set forth in FIG. 3. The Application Context Identifier shown in FIG. 3 provides an indication to the second call manager 50 that an ATM VCC is to be used between the second MSP 42 and first MSP 40 for the transfer of call data but it does not identify a specific ATM VCC to be used for the call. The second MSP 42 will either set up a new ATM VCC with the first MSP 40 or select an existing VCC from cache. The ATM address of the first MSP 40 identifies where the first MSP 40 is located in the ATM backbone network 25. This information is required by the second MSP 42 to establish a VCC to the first MSP 40. The inclusion of the ATM address of the first MSP 40 enables the setup in a backwards direction of the VCC between the two MSPs. The Signaling Correlation Tag enables the first MSP 40 to correlate a Set-Up message sent in the backwards direction from the second MSP 42 to the first MSP 40 with the IAM ADV from the first call manager 44 to the first MSP 40. This allows the SVC to be mapped to the TDM trunk at the originating end office seized for the call.

Once the IAM has been modified to include the APP, it is routed to the second call manager 50. On receipt of the modified IAM, the second call manager 50 sends an IAM ADV to the second MSP 42. The second MSP 42 returns an LAM ACK to the second call manager 50. On receipt of the IAM ACK, the second call manager 50 sends a Connection Request message to the second MSP 42. The Connection Request message includes the data from the Encapsulated Application Information field of the APP. On receipt of the Connection Request message, the second MSP 42 examines the Encapsulated Application Information to determine whether an existing (cached) VCC exists with the first MSP 40, or a new VCC must be established for the call.

In the present example, it is assumed that a new VCC is established for the call. The second MSP 42 formulates a Set-Up message which contains an ATM VCC Identifier selected by the MSP 42 to identify the VCC to be used for the call and the Signaling Correlation Tag from the APP. The Set-Up message is routed through the ATM backbone network 25 in a manner well known in the art to a terminating node which serves the first MSP 40. The Set-Up message sets up the ATM VCC as a switched virtual circuit (SVC) between the second MSP 42 and the first MSP 40, and is identified to the first MSP 40 by the VCC Identifier. The Signaling Correlation Tag in the Set-Up message is then used by the first MSP 40 to correlate the Setup message to the IAM ADV message previously sent from the first call manager 44 to the first MSP 40. This correlation permits the first MSP 40 to map the SVC set up between the MSPs 42 and 40 to a TDM trunk member seized by the originating office 27 for carrying the call. The setup of the SVC is then completed by a Connect message sent from the first MSP 40 to the second MSP 42 along the same path traversed by the Set-Up message, but in the forward direction. This is followed by a Synchronize message sent from the second MSP 42 to the first MSP 40. The Synchronize message tests the integrity of the SVC set up for the call. The first MSP 40 responds with a Synchronize Acknowledge message (Synchronize ACK) message sent from the first MSP 40 to the second MSP 42. Upon receipt of the Synchronize ACK message, the MSP 42 sends a Connection Request Acknowledgement (Connection REQ ACK) to the second call manager 50. Concurrently, the second call manager 50 removes the APP data from the IAM and amends the IAM to include a circuit identification code (CIC) of a trunk maintained in a trunk group that connects the end office 29 to the second MSP 42. The CIC indicates to the end office 29 the trunk on which the incoming call will arrive. The IAM, as amended, is then sent from the second call manager 50 to the terminating end office 29.

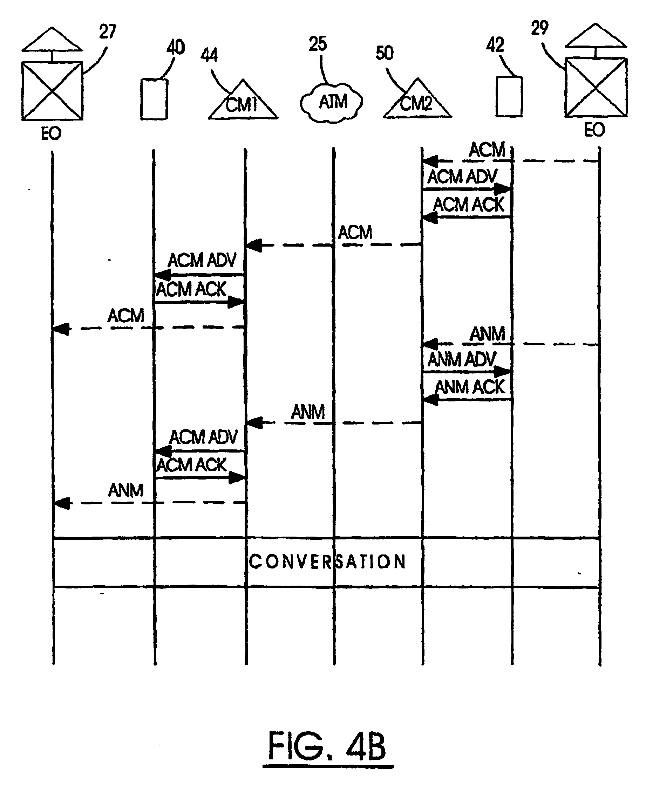

FIG. 4B illustrates a signaling sequence which is a continuation of the signaling sequence set forth in FIG. 4A. On receipt of the IAM at the terminating end office 29, the terminating end office verifies that the number is valid and the called line is available. After the verifications are complete, the terminating end office formulates an Address Complete message (ACM) and sends the ACM to the second call manager 50. The second call manager 50 then sends an ACM Advisory message (ACM ADV) to the second MSP 42, which responds with an ACM Acknowledge message (ACM ACK). Upon receipt of the ACM ACK, the ACM is forwarded from the second call manager 50 to the first call manager 44, which likewise sends an ACM ADV to the first MSP 40, which returns an ACM ACK. Upon receipt of the ACM ACK, the first call manager 44 forwards the ACM to the originating end office 27. Receipt of the ACM at the originating end office 27 completes a connection between the calling party line and the called party line. Consequently, ringing applied to the called party line by the terminating end office 29 is heard by the calling party. When the called party answers, an Answer message (ANM) is sent from the terminating end office 29 to the second call manager 50. The second call manager 50 responds by sending an ANM Advisory message (ANM ADV) to the second MSP 42, which returns an ANM Acknowledge message (ANM ACK). Upon receipt of the ANM ACK, the second call manager 50 forwards the ANM to the first call manager 44. The first call manager 44 sends an ANM ADV to the first MSP 40 which returns an ANM ACK. The ANM is then sent from the first call manager 44 to the originating end office 27 and conversation proceeds as for any regular call with the pulse code modulated (PCM) call data being transferred through the ATM backbone network 25.

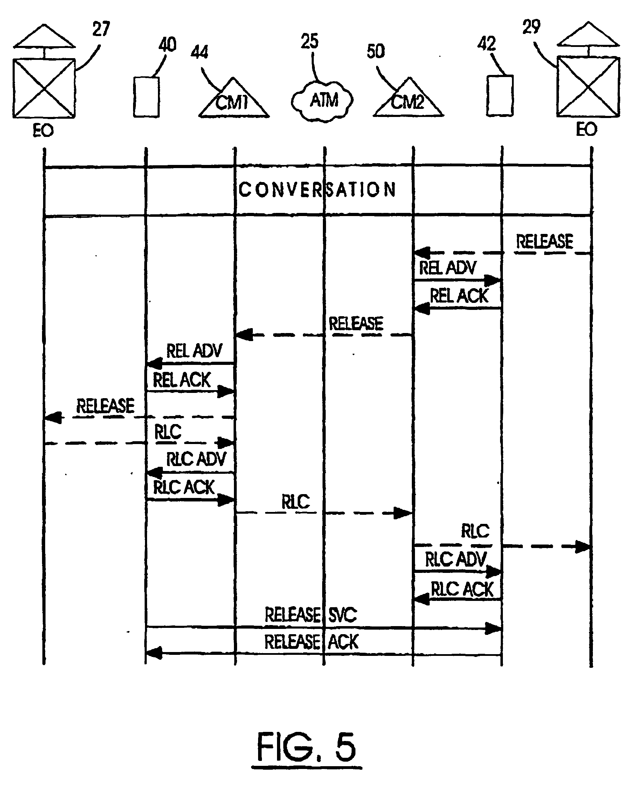

FIG. 5 illustrates a signaling sequence for taking down calls set-up between originating end office 27 and terminating end office 29, where the bearer traffic of the call is transferred by the ATM backbone network 25. The network elements shown in FIG. 5 are identical to the network elements illustrated in FIGS. 4a and 4B.

When the party at the end office 29 goes on-hook, a Release message is sent from end office 29 to the second call manager 50 which responds by sending a Release Advisory Message (REL ADV) to the second MSP 42, which returns a Release Acknowledge message (REL ACK). Upon receipt of the REL ACK, the second call manager 50 forwards the REL message to the first call manager 44, which sends a REL ADV to the first MSP 40, which returns a REL ACK. The REL message is then forwarded to the originating end office 27. The originating end office 27 responds with a Release Complete message (RLC) to the first call manager 44. The first call manager 44 responds to receipt of the RLC message by sending an RLC Advisory message (RLC ADV) to the first MSP 40 which returns an RLC Acknowledge message (RLC ACK). The RLC is subsequently sent to the second call manager 50, which forwards the RLC to the terminating end office 29. The second call manager 50 also sends an RLC ADV message to the second MSP 42 which responds with an RLC ACK. The SVC which was established for the call is released when the first MSP 40 sends a Release SVC message to the second MSP 42 in response to the RLC Advisory message received from the first call manager 40. This is acknowledged by a Release Acknowledge (Release ACK) message sent from the second MSP 42 to the first MSP 40. At this point, the call is completely taken down and the SVC established for the call is released, freeing the ATM facilities for use by other traffic.

FIG. 6 illustrates a signaling sequence where a call is established through the ATM backbone network 25 and the VCCs used to transfer the bearer traffic are SVCs that were pre-established and stored in a cache. This signaling sequence utilizes an APM signaling message which is defined in Report R-77 of the International Telecommunications Union described above, and which is incorporated herein by reference. The APM is an ISUP signaling message sent in either direction to convey application information. The APP described previously is encoded into the APM in substantially the same manner that it is encoded into an IAM message except that it includes a VCC identifier. The APM enables backward call set up between two subnetworks overlaid on the ATM backbone network 25 when a pre-established VCC is selected from cache for carrying bearer traffic associated with a call. Although the APM is an ISUP protocol message, the data in the APM may be packed into an ATM cell(s) and sent through the ATM backbone 25. The signaling sequence illustrates the steps for call setup when the call originates at end office 27 and terminates at end office 29. The network configuration is identical to the one described above with reference to FIGs. 4A and 4B.

As shown in FIG. 6, a call originates at end office 27, which formulates and sends an IAM to the first call manager 44 in response to digits dialed by a calling party. On receipt of the IAM, the first call manager 44 extracts call information, formulates an IAM ADV and sends it to the first MSP 40, which returns an IAM ACK. The first call manager 44 then modifies the IAM to include: an OPC of the first call manager 44; a DPC of the second call manager 50; and information to identify features of the first subnetwork related to the call. This information is defined in part by the Encapsulated Application Information Fields of the APP, as described above. Once the APP has been encoded into the IAM, the IAM is sent from the first call manager 44 to the second call manager 50. Upon receipt of the IAM, the second call manager 50 sends an IAM ADV to the second MSP 42 which responds with an IAM ACK. Upon receipt of the IAM ACK, the second call manager 50 formulates and sends a Connection Request message to the second MSP 42. The Connection Request message includes the Encapsulated Application Information extracted from the IAM.

On receipt of the Connection Request message, the second MSP 42 examines the Encapsulated Application Information to determine whether a pre-established (cached) VCC exists for the ATM address of the first MSP 40. In the present example, it is assumed that an idle cached VCC exists and that it is selected for the call. SVC caching is described in detail in Applicant's co-pending United States patent application entitled METHOD AND APPARATUS FOR REDUCTION OF CALL SETUP RATE IN ATM NETWORK which was filed on October 2, 1998, the entire specification of which is incorporated herein by reference. The second MSP 42 formulates an APM message containing an APP which is encoded with two pieces of data in the Encapsulated Application Information Field. The first is the ATM VCC Identifier, which identifies an available SVC in the cache pool to carry the bearer traffic associated with the call. The second is the Signaling Correlation Tag which will correlate the APM to an IAM ADV previously sent from the first call manager 44 to the first MSP 40.

The ATM VCC Identifier permits the first MSP 40 to select the available SVC to carry the bearer traffic for the call. The Signal Correlation Tag permits the first MSP 40 to also correlate the APM message to the IAM ADV previously sent from the originating end office 27 to the first MSP 40. This correlation permits the SVC selected from cache to be mapped to the TDM trunk seized at the originating end office. The first MSP 40 then sends a Synchronize message to the second MSP 42. The Synchronize message tests the integrity of the SVC connection, and is followed by a Synchronize ACK returned by the second MSP 42. Subsequently, the second MSP 42 sends a Connection REQ ACK to the second call manager 50. When the second call manager 50 receives the Connection REQ ACK message, it inserts CIC information into the IAM to identify a TDM trunk member in a trunk group that connects the second MSP 42 to the terminating end office 29. The IAM with the CIC information is then sent from the second call manager 50 to the terminating end office 29. Subsequently, call processing proceeds in a manner identical to that described above with reference to FIG. 4B.

Call release procedures for calls set up using SVCs from cache follow substantially the same signaling sequence as illustrated in FIG. 5. After the ISUP signaling sequence is complete, or concurrently with it, a decision must be made as to whether the SVC used for the call is to be returned to the cache or released. If the SVC is to be returned to cache, a one of the two MSPs, the first MSP 40, for example, which serves as master of the cache pool sends a Cache SVC message (not shown) to the second MSP 42 and changes the status of the SVC in the cache to "idle". Otherwise, a Release SVC message is sent from the first MSP 40 to the second MSP 42, which instructs the second MSP to release the SVC. The Release SVC message is acknowledge by a Release ACK to complete the SVC release.

It should be understood that although the PSTN signaling described above assumes a use of ISUP protocol, other signaling protocols which are enabled to control call flow through a switched telephone network could also be used. It should also be understood that although the CCS network is described as the preferred path for signaling messages exchanged between the PSTN telephone switches and the call managers 44, 50, the ATM backbone network 25 could also be used to transfer signaling messages. To accomplish this, the PSTN telephone switches are provided with ATM interfaces in a manner well known in the art.

In summary; a method and apparatus for completing telephone calls between trunk subnetworks overlaid on an ATM backbone is described. Each of the trunk subnetworks include a call manager which is configured for exchanging signaling messages with both a common channel signaling network and the ATM backbone network. This permits ATM facility providers to link subnetworks using a common infrastructure so that calls can be effectively diverted from the PSTN between end offices while fully supporting PSTN/ISDN services. This is achieved by using a signaling method in which call request messages are encoded by a first call manager with a parameter so that a second call manager in the signaling path can effect backward call set up between ATM interfaces using data from the parameter. The advantage is the extension of call completion between subnetworks overlaid on an ATM backbone using ATM facilities without sacrificing PSTN/ISDN call features.

There has thus been shown and described novel aspects of a method and apparatus for setting up calls between ATM subnetworks, which fulfil the objects and advantages described herein. Changes, modifications, variations, combinations, sub-combinations and other uses and applications of the subject invention may, however, become apparent to those skilled in the art after considering the specification and the accompanying drawings which disclose the preferred embodiments thereof.

## Claims

1. An apparatus for transferring voice or voice grade data using asynchronous transfer mode, hereinafter designated as ATM, protocol between first and second telephone switches (27, 29) respectively associated with first and second subnetworks (32, 34) adapted to use an ATM backbone network (25) for the transfer of inter-switch bearer traffic, said first telephone switch (27) having a first interface (40) with said first subnetwork (32) and said second telephone switch (29) having a second interface(42) with said second subnetwork (34), said first and second interfaces (40, 42) being respectively adapted to convert pulse code modulated data to ATM cells and vice versa,
**CHARACTERIZED by**:
a first call manager (44) logically associated with the first subnetwork (32);
a second call manager (50) logically associated with the second subnetwork (34);
said first and second call managers (44, 50) being enabled to exchange signaling messages, the signaling messages containing information to effect call set up between said first and second interfaces (40, 42);
said first call manager (44) is enabled to receive a signaling message from said first switch (27) and modify a content of said signaling message to include information related to said first interface (40) required to set up a call associated with said signaling message, wherein said information comprises an ATM address of said first interface (40) in said first subnetwork (32).

2. The apparatus as claimed in claim 1, wherein the call set up is effected in a backwards direction with respect to a call path, the call set up being effected from the second interface (42) to the first interface (40).

3. The apparatus as claimed in claims 1 or 2, wherein said signaling messages are exchanged through the ATM backbone network (25).

4. The apparatus as claimed in any preceding claim, wherein said signaling messages are exchanged using a common channel signaling network (58).

5. The apparatus as claimed in claim 4, wherein said common channel signaling network (58) is Signaling System 7, hereinafter designated as SS7.

6. The apparatus as claimed in claim 5, wherein said SS7 signaling messages comprise ISDN User Part hereinafter designated as ISUP messages.

7. The apparatus as claimed in claims 5 or 6, wherein said SS7 signaling messages comprise Initial Address Messages, hereinafter designated as IAMs.

8. The apparatus as claimed in claim 7, wherein said signaling message is an IAM and said first call manager (44) is enabled to receive said IAM from said first switch (27) and modify a content of said IAM to indude said information related to said first interface (40) required to set up a call associated with the IAM.

9. The apparatus as claimed in claim 8, wherein said second call manager (50) is configured to exchange ATM messages with said second interface (42) for initiating backward call set up between said second interface (42) and said first interface (40) in response to said modified IAM.

10. The apparatus as claimed in claim 9, wherein said information related to said first interface (40) comprises a correlation tag to permit correlation between a message related to the IAM sent by the first call manager (44) to the first interface (40) and a message related to the IAM sent from the second interface (42) to the first interface (40).

11. The apparatus as claimed in claim 10, wherein said second call manager (50) is adapted to further modify the IAM and forward the further modified IAM to said second telephone switch (29) to initiate a trunk seizure for said call.

12. The apparatus as claimed in claim 11, wherein said second interface (42) is configured to effect backward call set up by routing messages through the ATM backbone network (25) from said second interface (42) to the said first interface (40) to enable virtual channel connections to be effected between said first and second interfaces (40. 42).

13. A method for routing a telephone call between a first and second telephone switch (27, 29) respectively associated with a first and second subnetwork (32, 34) which use asynchronous transfer mode (ATM) protocol to transfer bearer traffic between telephone switches in the respective subnetworks, said first telephone switch (27) having a first interface (40) with said first subnetwork (32) and said second telephone switch (34) having a second interface (42) with said second subnetwork (34), first and second call managers (44, 50) being logically associated with said respective first and second subnetworks (32, 34),
**CHARACTERIZED by**:
(i) routing a call request message from said first telephone switch (27) to said first call manager (44);
(ii) translating a dialed number extracted from said call request message to obtain routing information for said call;
(iii) modifying said call request message to include information pertaining to the origination of the call and forwarding said modified call request message to said second call manager (50) using the routing information for the call request message, wherein the information pertaining to the origination of the call comprises an ATM address of said first interface (40);
(iv) translating a dialed number extracted from said modified call request message at said second call manager (50) to identify said second telephone switch (29);
(v) sending a signaling message from said second call manager (50) to said second interface (42), the signaling message including the information pertaining to the origination of the call;
(vi) sending a signaling message from said second interface (42) to said first interface (40) to effect a connection to transfer bearer traffic associated with the call; and
(vii) further modifying the call request message and forwarding said further modified call request message from said second call manager (50) to said second telephone switch (29) to initiate seizure of a trunk at said second switch (29) to enable call completion.

14. The method as claimed in claim 13, wherein said call request messages are common channel signaling messages.

15. The method as claimed in claim 14, wherein said call request messages are SS7 Initial Address Messages (IAM).

16. The method as claimed in claim 13, wherein the step of modifying said call request message further comprises:
inserting a correlation tag to permit correlation at the first interface (40) between a message related to said modified call request message with said signaling message sent from the second interface (42) to the first interface (40).

17. The method as claimed in any one of claims 13-16, wherein said signaling message sent from the second interface (42) to the first interface (40) enable virtual channel connections to be effected between said first and second subnetworks (32, 34) for transferring bearer traffic associated with the call through the ATM backbone network (25).

18. The method as claimed in any one of claims 13-17, wherein said signaling message sent from the second interface (42) to the first interface (40) identifies an existing virtual channel connection through the ATM backbone network (25) for transferring the bearer traffic.

19. The method as claimed in any one of claims 13, 16-18, wherein said signaling messages are ATM signaling messages.

20. The method as claimed in any one of claims 13-18, wherein said call request message is an ISUP signaling message.

21. A communications network comprising the apparatus of claims 1 - 12.

## Revendications

1. Un appareil pour transmettre de la voix ou des données de qualité vocale en utilisant le protocole de mode de transfert asynchrone, appelé ci-après ATM, entre des premier et deuxième commutateurs téléphoniques (27, 29) respectivement associés à des premier et deuxième sous-réseaux (32, 34) adaptés pour utiliser un réseau dorsal ATM (25) pour le transport de trafic support inter-commutateur, le premier commutateur téléphonique (27) ayant une première interface (40) avec le premier sous-réseau (32) et le deuxième commutateur téléphonique (29) ayant une deuxième interface (42) avec le deuxième sous-réseau (34), les première et deuxièmes interfaces (40, 42) étant respectivement adaptées pour convertir des données en modulation par impulsions et codage en cellules ATM, et inversement,
**CARACTERISE par** :
un premier gestionnaire d'appels (44) associé logiquement au premier sous-réseau (32);
un deuxième gestionnaire d'appels (50) associé logiquement au deuxième sous-réseau (34);
les premier et deuxième gestionnaires d'appels (44, 50) ayant la possibilité d'échanger des messages de signalisation, les messages de signalisation contenant de l'information pour effectuer un établissement d'appel entre les première et deuxième interfaces (40, 42);
le premier gestionnaire d'appels (44) ayant la possibilité de recevoir un message de signalisation provenant du premier commutateur (27) et de modifier un contenu de ce message de signalisation pour inclure une information liée à la première interface (40), exigée pour établir un appel associé audit message de signalisation, ladite information comprenant une adresse ATM de la première interface (40) dans le premier sous-réseau (32).

2. L'appareil selon la revendication 1, dans lequel l'établissement d'appel est effectué dans une direction de retour vis-à-vis d'un itinéraire d'appel, l'établissement d'appel étant effectué à partir de la deuxième interface (42) vers la première interface (40).

3. L'appareil selon les revendications 1 ou 2, dans lequel les messages de signalisation sont échangés à travers le réseau dorsal ATM (25).

4. L'appareil selon l'une quelconque des revendications précédentes, dans lequel les messages de signalisation sont échangés en utilisant un réseau de signalisation par canal sémaphore (58).

5. L'appareil selon la revendication 4, dans lequel le réseau de signalisation par canal sémaphore (58) est le Signaling System 7, appelé ci-après SS7.

6. L'appareil selon la revendication 5, dans lequel les messages de signalisation SS7 comprennent une Section d'Utilisateur RNIS (ISDN User Part) qu'on appelle ci-après des messages ISUP.

7. L'appareil selon les revendications 5 ou 6. dans lequel les messages de signalisation SS7 comprennent des Messages d'Adresse Initiaux (Initial Address Messages), appelés ci-après IAM.

8. L'appareil selon la revendication 7, dans lequel le message de signalisation est un IAM et le premier gestionnaire d'appels (44) a la possibilité de recevoir cet IAM à partir du premier commutateur (27) et de modifier un contenu de l'IAM de façon à inclure ladite information liée à la première interface (40), exigée pour établir un appel associé à l'IAM.

9. L'appareil selon la revendication 8, dans lequel le deuxième gestionnaire d'appels (50) est configuré pour échanger des messages ATM avec la deuxième interface (42) pour déclencher un établissement d'appel en direction de retour entre la deuxième interface (42) et la première interface (40), en réponse à l'IAM modifié.

10. L'appareil selon la revendication 9, dans lequel l'information liée à la première interface (40) comprend une étiquette de corrélation pour permettre la corrélation entre un message lié à l'IAM envoyé par le premier gestionnaire d'appels (44) vers la première interface (40) et un message lié à l'IAM envoyé par la deuxième interface (42) vers la première interface (40).

11. L'appareil selon la revendication 10, dans lequel le deuxième gestionnaire d'appels (50) est adapté pour modifier à nouveau l'IAM et diriger vers le deuxième commutateur téléphonique (29) l'IAM modifié à nouveau, pour commencer une opération de prise de jonction pour l'appel.

12. L'appareil selon la revendication 11, dans lequel la deuxième interface (42) est configurée pour effectuer un établissement d'appel en direction de retour en acheminant des messages à travers le réseau dorsal ATM (25) à partir de la deuxième interface (42) vers la première interface (40) pour permettre de créer des connexions de canal virtuel entre les première et deuxième interfaces (40, 42).

13. Un procédé pour acheminer un appel téléphonique entre des premier et deuxième commutateurs téléphoniques (27, 29) respectivement associés à des premier et deuxième sous-réseaux (32, 34) qui utilisent le protocole de mode de transfert asynchrone (ATM) pour transmettre du trafic support entre des commutateurs téléphoniques dans les sous-réseaux respectifs, le premier commutateur téléphonique (27) ayant une première interface (40) avec le premier sous-réseau (32) et le deuxième commutateur téléphonique (34) ayant une deuxième interface (42) avec le deuxième sous-réseau (34), des premier et deuxième gestionnaires d'appels (44, 50) étant associés logiquement aux premier et deuxième sous-réseaux (32, 34) respectifs,
**CARACTERISE par** :
(i) le routage d'un message de demande d'appel à partir du premier commutateur téléphonique (27) vers le premier gestionnaire d'appel (44);
(ii) la traduction d'un numéro composé au clavier, extrait du message de demande d'appel, pour obtenir une information de routage pour l'appel;
(iii) la modification du message de demande d'appel pour inclure une information concernant l'émission de l'appel et l'acheminement du message de demande d'appel modifié vers le deuxième gestionnaire d'appels (50) en utilisant l'information de routage pour la message de demande d'appel, l'information concernant l'émission de l'appel comprenant une adresse ATM de la première interface (40);
(iv) la traduction d'un numéro composé au clavier, extrait du message de demande d'appel modifié, au deuxième gestionnaire d'appels (50) pour identifier le deuxième commutateur téléphonique (29);
(v) l'envoi d'un message de signalisation à partir du deuxième gestionnaire d'appels (50) vers la deuxième interface (42), le message de signalisation incluant l'information concernant l'émission de l'appel;
(vi) l'envoi d'un message de signalisation à partir de la deuxième interface (42) vers la première interface (40) pour établir une connexion pour transmettre du trafic support associé à l'appel; et
(vii) la rnodification. à nouveau du message de demande d'appel et l'acheminement du message de demande d'appel modifié à nouveau, à partir du deuxième gestionnaire d'appels (50) vers le deuxième commutateur téléphonique (29), pour commencer l'opération de prise d'une jonction au deuxième commutateur téléphonique (29) pour permettre l'établissement complet de l'appel.

14. Le premier selon la revendication 13, dans lequel les messages de demande d'appel sont des messages de signalisation par canal sémaphore.

15. Le procédé selon la revendication 14, dans lequel les messages de demande d'appel sont des Messages d'Adresse initiaux (IAM pour "Initial Address Messages") SS7.

16. Le procédé selon la revendication 13, dans lequel l'étape de modification du message de demande d'appel comprend en outre :
l'insertion d'une étiquette de corrélation pour permettre la corrélation à la première interface (40) entre un message lié au message de demande d'appel modifié, et le message de signalisation envoyé à partir de la deuxième interface (42) vers la première interface (40).

17. Le procédé selon l'une quelconque des revendications 13-16. dans lequel le message de signalisation envoyé à partir de la deuxième interface (42) vers la première interface (40) permet d'établir des connexions de canal virtuel entre les premier et deuxième sous-réseaux (32, 34) pour transporter à travers le réseau dorsal ATM (25) du trafic support associé à l'appel.

18. Le procédé selon l'une quelconque des revendications 13-17, dans lequel le message de signalisation envoyé à partir de la deuxième interface (42) vers la première interface (40) identifie une connexion de canal virtuel existante à travers le réseau dorsal ATM (25) pour transporter le trafic support.

19. Le procédé selon l'une quelconque des revendications 13, 16-18, dans lequel les messages de signalisation sont des messages de signalisation ATM.

20. Le procédé selon l'une quelconque des revendications 13-18, dans lequel le message de demande d'appel est un message de signalisation ISUP.

21. Un réseau de communication comprenant l'appareil des revendications 1-12.

## Patentansprüche

1. Vorrichtung zur Übertragung von Sprache oder Sprachqualitäts-Daten unter Verwendung eines asynchronen Übertragungsbetriebsart, nachfolgend als ATM-, Protokoll bezeichnet, zwischen ersten und zweiten Telefonvermittlungen (27, 29), die jeweils ersten und zweiten Teil-Netzwerken (32, 34) zugeordnet sind, die so ausgebildet sind, dass sie ein ATM-Backbone-Netzwerk (25) für die Übertragung von Zwischenvermittlungs-Trägerverkehr verwenden, wobei die erste Telefonvermittlung (27) eine erste Schnittstelle (40) mit dem ersten Teil-Netzwerk (32) aufweist und die zweite Telefonvermittlung (29) eine zweite Schnittstelle (42) mit dem zweiten Teil-Netzwerk (34) aufweist, wobei die ersten und zweiten Schnittstellen (40, 42) jeweils so ausgebildet sind, dass sie pulscodemodulierte Daten in ATM-Zeilen und umgekehrt umwandeln, **gekennzeichnet durch**:
eine erste Verbindungsverwaltung (44), die logisch dem ersten Teil-Netzwerk (32) zugeordnet ist;
eine zweite Verbindungsverwaltung (50), die logisch dem zweiten Teil-Netzwerk (34) zugeordnet ist;
wobei die ersten und zweiten Verbindungsverwaltungen (44, 50) zum Austausch von Signalisierungsmitteilungen fähig sind, wobei die Signalisierungsmitteilungen Informationen zum Bewirken eines Verbindungsaufbaus zwischen den ersten und zweiten Schnittstellen (40, 42) enthalten;
wobei die erste Verbindungsverwaltung (44) so ausgebildet ist, dass sie eine Signalisierungsmitteilung von der ersten Vermittlung (27) empfängt und einen Inhalt der Signalisierungsmitteilung so modifiziert, dass sie Information bezüglich der ersten Schnittstelle (40) einschließt, die erforderlich ist, um eine der Signalisierungsmitteilung zugeordnete Verbindung aufzubauen, wobei die Information eine ATM-Adresse der ersten Schnittstelle (40) in dem ersten Teil-Netzwerk (32) umfasst.

2. Vorrichtung nach Anspruch 1, bei der der Verbindungsaufbau in einer Rückwärtsrichtung bezüglich des Verbindungspfades bewirkt wird, wobei der Verbindungsaufbau von der zweiten Schnittstelle (42) zu der ersten Schnittstelle (40) bewirkt wird.

3. Vorrichtung nach Anspruch 1 oder 2, bei der die Signalisierungsmitteilungen über das ATM-Backbone-Netzwerk (25) ausgetauscht werden.

4. Vorrichtung nach einem der vorhergehenden Ansprüche, bei der die Signalisierungsmitteilungen unter Verwendung eines zentralen Signalisierungskanal-Netzwerkes (58) ausgetauscht werden.

5. Vorrichtung nach Anspruch 4, bei der das zentrale Signalisierungskanal-Netzwerk (58) ein Signalisierungssystem 7 ist, das nachfolgend als SS7 bezeichnet wird.

6. Vorrichtung nach Anspruch 5, bei der die SS7-Signalisierungsmitteilungen einen ISDN-Benutzerteil-Mitteilungen umfassen, die nachfolgend als ISUP-Mitteilungen bezeichnet werden.

7. Vorrichtung nach Anspruch 5 oder 6, bei der die SS7-Signalisierungsmitteilungen Anfangsadressen-Mitteilungen umfassen, die nachfolgend als IAM's bezeichnet werden.

8. Vorrichtung nach Anspruch 7, bei der die Signalisierungsmitteilung eine IAM ist und die erste Verbindungsverwaltung (44) so ausgebildet ist, dass sie die IAM von der ersten Vermittlung (27) empfängt und den Inhalt der IAM so modifiziert, dass diese die Information bezüglich der ersten Schnittstelle (40) enthält, die erforderlich ist, um eine der IAM zugeordnete Verbindung aufzubauen.

9. Vorrichtung nach Anspruch 8, bei der die zweite Verbindungsverwaltung (50) so konfiguriert ist, dass sie ATM-Mitteitungen mit der zweiten Schnittstelle (42) zur Einleitung einer Rückwärtsverbindung austauscht, die zwischen der zweiten Schnittstelle (42) und der ersten Schnittstelle (40) als Antwort auf die modifizierte IAM aufgebaut wird.

10. Vorrichtung nach Anspruch 9, bei der die sich auf die erste Schnittstelle (40) beziehende Information eine Korrelations-Marke umfasst, um eine Korrelation zwischen einer Mitteilung bezüglich der IAM, die von der ersten Verbindungsverwaltung (44) an die ersten Schnittstelle (40) gesandt wurde, und einer Mitteilung bezüglich der IAM, die von der zweiten Schnittstelle (42) an die erste Schnittstelle (40) gesandt wurde, zu ermöglichen.

11. Vorrichtung nach Anspruch 10, bei der die zweite Verbindungsverwaltung (50) so ausgebildet ist, dass sie die IAM weiter modifiziert und die weiter modifizierte IAM an die zweite Telefonvermittlung (29) weiterleitet, um eine Fernleitungs-Belegung für die Verbindung einzuleiten.

12. Vorrichtung nach Anspruch 11, bei der die zweite Schnittstelle (42) so konfiguriert ist, dass sie einen Rückwärts-Verbindungsaufbau durch Lenken von Mitteilungen über das ATM-Backbone-Netzwerk (25) von der zweiten Schnittstelle (42) an die erste Schnittstelle (40) bewirkt, um das Ausführen von virtuellen Kanalverbindungen zwischen den ersten und zweiten Schnittstellen (40, 42) zu ermöglichen.

13. Verfahren zum Lenken einer Telefonverbindung zwischen einer ersten und zweiten Telefonvermittlung (27, 29), die jeweils einem ersten und einem zweiten Teil-Netzwerk (32, 34) zugeordnet sind, die das asynchrone Übertragungsbetriebsart- (ATM-) Protokoll zur Übertragung von Trägerverkehr zwischen Telefonvermittlungen in den jeweiligen Teil-Netzwerken verwenden, wobei die erste Telefonvermittlung (27) eine erste Schnittstelle (40) mit dem ersten Teil-Netzwerk (32) aufweist und die zweite Telefonvermittlung (34) eine zweite Schnittstelle (42) mit dem zweiten Teil-Netzwerk (34) aufweist, wobei erste und zweite Verbindungsverwaltungen (44, 50) logisch den jeweiligen ersten und zweiten Teil-Netzwerken (32, 34) zugeordnet sind, **gekennzeichnet durch**:
(i) Lenken einer Verbindungs-Anforderungsmitteilung von der ersten Telefonvermittlung (27) an die erste Verbindungsverwaltung (44);
(ii) Übersetzen einer gewählten Nummer, die aus der Verbindungs-Anforderungsmitteilung abgeleitet wurde, um Routenführungs-information für die Verbindung zu gewinnen;
(iii) Modifizieren der Anruf-Anforderungsmitteiiung derart, dass sie Informationen bezüglich des Ursprunges der Verbindung einschließt, und Weiterleiten der modifizierten Anruf-Anforderungsmitteilung an die zweite Verbindungsverwaltung (45) unter Verwendung der Routenführungsinformation für die Verbindungs-Anforderungsmitteilung, wobei die sich auf den Ursprung der Verbindung beziehende Information eine ATM-Adresse der ersten Schnittstelle (40) umfasst;
(iv) Übersetzen der gewählten Nummer, die von der modifizierten Verbindungs-Anforderungsmitteilung abgeleitet wurde, an der zweiten Verbindungsverwaltung (50), zur Identifikation der zweiten Telefonvermittlung (29);
(v) Senden einer Signalisierungsmitteilung von der zweiten Verbindungsverwaltung (50) an die zweite Schnittstelle (42), wobei die Signalisierungsmitteilung die sich auf den Ursprung der Verbindung beziehende Information einschließt;
(vi) Senden einer Signalisierungsmitteilung von der zweiten Schnittstelle (42) an die erste Schnittstelle (40) zum Bewirken einer Verbindung zur Übertragung von Trägerverkehr, der der Verbindung zugeordnet ist; und
(vii) weiteres Modifizieren der Verbindungs-Anforderungsmitteilung und Weiterleitung der weiter modifizierten Verbindungs-Anforderungsmitteilung von der zweiten Verbindungsverwaltung (50) an die zweite Telefonvermittlung (29), um die Belegung einer Femleitung an der zweiten Vermittlung (29) einzuleiten, um den Abschluss des Verbindungsaufbaus zu ermöglichen.

14. Verfahren nach Anspruch 13, bei dem die Verbindungs-Anforderungsmitteilungen gemeinsame Signalisierungskanal-Mitteilungen sind.

15. Verfahren nach Anspruch 14, bei dem die Verbindungs-Anforderungsmitteilungen SS7-Anfangsadressen-Mitteilungen (IAM) sind.

16. Verfahren nach Anspruch 13, bei dem der Schritt der Modifikation der Anruf-Anforderungsmitteilung weiterhin Folgendes umfasst:
Einfügen einer Korrelationsmarke, um eine Korrelation an der ersten Schnittstelle (40) zwischen einer Mitteilung, die auf die modifizierte Verbindungs-Anforderungsmitteilung bezogen ist, mit der Signalisierungsmitteilung zu ermöglichen, die von der zweiten Schnittstelle (42) an die erste Schnittstelle (40) gesandt wurde.

17. Verfahren nach einem der Ansprüche 13-16, bei dem die Signalisierungsmitteilung, die von der zweiten Schnittstelle (42) an die erste Schnittstelle (40) gesandt wird, die Ausführung virtueller Kanalverbindungen zwischen den ersten und zweiten Teil-Netzwerken (32, 34) zur Übertragung von Trägerverkehr, der der Verbindung zugeordnet ist, durch das ATM-Backbone-Netzwerk (25) zu ermöglichen.

18. Verfahren nach einem der Ansprüche 13-17, bei dem die Signalisierungsmitteilung, die von der zweiten Schnittstelle (42) an die erste Schnittstelle (40) gesandt wird, eine vorhandene virtuelle Kanalverbindung durch das ATM-Backbone-Netzwerk (25) zur Übertragung des Trägerverkehrs identifiziert.

19. Verfahren nach einem der Ansprüche 13, 16-18, bei dem die Signalisierungsmitteilungen ATM-Signalisierungsmitteilungen sind.

20. Verfahren nach einem der Ansprüche 13-18, bei dem die Verbindungs-Anforderungsmitteilung eine ISUP-Signalsierungsmitteilung ist.

21. Kommunikations-Netzwerk, das die Vorrichtung nach den Ansprüchen 1-12 umfasst.
